# EUROPÄISCHE PATENTSCHRIFT

(11) **EP 0 992 401 B1**
(45) Veröffentlichungstag und Bekanntmachung des Hinweises auf die Patenterteilung: **01.12.2004**
(21) Anmeldenummer: 99116894.9
(22) Anmeldetag: 07.09.1999
(51) Int. Cl.: B60R 16/02, G01R 31/36

(54) **Verfahren und Schaltungsanordnung zum Betreiben des Bordnetzes eines Fahrzeugs**
Method and circuit arrangement for operating a vehicle bord network
Procédé et circuit pour utiliser le réseau de bord d'un véhicule

(30) Priorität: 02.10.1998 DE 19845563
(43) Veröffentlichungstag der Anmeldung: 12.04.2000
(73) Patentinhaber: Volkswagen Aktiengesellschaft, 38436 Wolfsburg (DE)
(72) Erfinder: Dierker, Uwe, Dipl.-Ing., 38550 Isenbüttel (DE); Michels, Karsten, Dipl.-Ing., 38126 Braunschweig (DE)
(74) Vertreter: Zucker, Volker, Dipl.-Ing.

(56) Entgegenhaltungen:
- DE-A- 4 112 987
- DE-A- 4 339 568
- DE-A- 4 422 329
- DE-C- 3 330 953
- DE-C- 3 814 551

## Beschreibung

Die Erfindung betrifft ein Verfahren zum Betreiben des Bordnetzes eines Fahrzeugs gemäß Oberbegriff des Anspruchs 1 sowie eine Schaltungsanordnung zur Durchführung des erfindungsgemäßen Verfahrens.

Das Bordnetz eines Kraftfahrzeugs umfaßt eine Vielzahl von elektrischen Verbrauchern, durch deren Betrieb für die Fahrzeugbatterie eine negative Ladebilanz entstehen kann, wenn das Fahrzeug beispielsweise häufig im Kurzstreckenbetrieb und im Stadtverkehr eingesetzt wird. Insbesondere in der kalten Jahreszeit kann dies dazu führen, daß die Fahrzeugbatterie schließlich einen derart schlechten Ladezustand hat, daß ein Starten des Fahrzeugs nicht mehr möglich ist.

Um eine zu starke Entladung der Fahrzeugbatterie zu vermeiden, können bei schlechtem Ladezustand Verbraucher, die für den Betrieb des Fahrzeugs nicht zwingend erforderlich sind, vorübergehend abgeschaltet werden. Die DE 44 22 329 A1 beschreibt ein Verfahren und eine Vorrichtung zum Betreiben eines elektrischen Fahrzeugbordnetzes, wobei die Versorgung von elektrischen Verbrauchern mit elektrischer Energie in Abhängigkeit von der jeweiligen Ladebilanz reduziert werden kann. Die Ladebilanz ergibt sich aus dem Lade- und Entladestrom der Fahrzeugbatterie innerhalb vorausgegangener Zeitabschnitte. Außerdem kann die Abschaltung von Verbrauchern oder die Reduzierung der Leistungsaufnahme der Verbraucher von dem Auslastungsgrad des vom Motor angetriebenen Fahrzeuggenerators abhängig gemacht werden. Die Ermittlung des Ladezustandes anhand der Ladebilanz erfordert entsprechende Einrichtungen, mit denen die in vorausgegangenen Zeitabschnitten geflossenen Lade- und Entladeströme aufsummiert werden. Diese gattungsbildende - Druckschrift sieht dabei auch vor, daß gegebenenfalls bei einer festgestellten kritischen Ladebilanz eine Anhebung der Leerlaufdrehzahl veranlaßt werden kann, um einen höheren Strom vom Fahrzeuggenerator in das Bordnetz einzuspeisen.

In der DE 33 30 953 C1 wird zur Ermittlung der Ladebilanz eine approximierte Integration des Stromsignals innerhalb einer bestimmten endlichen Betriebszeit durchgeführt. Daraus wird ein Maß für den ordnungsgemäßen Betrieb der elektronischen Energieversorgung des Kraftfahrzeugs abgeleitet. In der DE 43 39 568 A1 wird außer der Betrachtung des Lade- und Entladestroms zur Bestimmung der Ladebilanz auch noch die Batterietemperatur und die Batterieruhespannung berücksichtigt, um erkennen zu können, wie lange die Batterie unter den gegebenen Bedingungen noch einen akzeptablen Entladestrom liefern kann.

Die Ermittlung des Bordnetzzustandes über die aktuelle Bordnetzspannung und/oder die aktuelle Auslastung des Generators erlaubt lediglich eine Aussage über den Momentanzustand. Ob das Fahrzeug beim aktuellen Ladegrad der Batterie und einer angenommenen Temperatur noch startfähig ist, läßt sich nicht sagen. Dafür ist aber der technische Aufwand im Vergleich zur Bestimmung des Ladegrades der Batterie gering, denn entweder wird nur ein ohnehin vorhandenes Signal, wie z. B. das DF-Signal des Generators benutzt, oder es wird die Bordnetzspannung gemessen. Die Erfassung des DF-Signals allein birgt den Nachteil, daß keine Aussage über die Höhe einer Überlastung vorliegt, da der obere Wert des DF-Signals lediglich bedeutet, daß der Generator voll belastet ist. Außerdem ist dieses Signal bei Motorstillstand nicht vorhanden. Bei der Bordnetzspannung gilt zu bedenken, daß die Genauigkeit, mit der gemessen werden muß, für eine Fahrzeuganwendung recht hoch ist.

Der Erfindung liegt die Aufgabe zugrunde, ein Verfahren zum Betreiben des Bordnetzes eines Fahrzeugs zu schaffen, das mit einfachen Mitteln die Feststellung eines kritischen Bordnetzzustandes ermöglicht.

Die Lösung dieser Aufgabe erhält man mit den im Anspruch 1 angegebenen Merkmalen. Um im Falle eines kritischen Bordnetzzustands rechtzeitig Maßnahmen zur Verbesserung der Energiebilanz einleiten zu können, werden Betrachtungszeiträume mit hoher Bordnetzbelastung mittels eines Zustandszählers festgehalten, in dem bei einem Betrachtungszeitraum mit hoher Bordnetzbelastung der Zählerstand des Zustandszählers erhöht wird. Andererseits wird nach jedem Betrachtungszeitraum mit entsprechend positiver Energiebilanz des Bordnetzes der Zählerstand des Zustandszählers erniedrigt. Erreicht der Zählerstand einen kritischen Wert, werden Maßnahmen zur Verbesserung der Energiebilanz des Bordnetzes eingeleitet. Der Zählerstand stellt ein Maß für einen mehr oder weniger kritischen Bordnetzzustand dar, wobei die zur Verbesserung der Energiebilanz einzuleitenden Maßnahmen in Abhängigkeit von der Höhe des Zählerstands eingeleitet werden können. Dabei können beispielsweise auch Verbraucher mit entsprechend hoher Priorität erst bei einem höheren Zählerstand abgeschaltet werden, während Verbraucher mit niedriger Priorität, wie beispielsweise die elektrische Sitzheizung, schon bei einem niedrigeren Zählerstand vorübergehend abgeschaltet oder in ihrer Energiezufuhr reduziert werden können. Der Zählerstand zeigt auf einfache Weise an, ob in vorausgegangenen Betrachtungszeiträumen das Bordnetz überwiegend hohen Belastungen ausgesetzt war, oder nicht. Ist der Zählerstand niedrig oder auf dem Wert Null, so zeigt dies an, daß in vorausgegangenen Betrachtungszeiträumen das Bordnetz bzw. die Fahrzeugbatterie nicht übermäßig belastet wurde.

Aus der DE 41 12 987 A1 ist zwar eine Vorrichtung zur Bestimmung des Ladezustands einer Batterie bekannt, die ebenfalls einen Zähler verwendet, jedoch werden dort unterschiedlichen Verbrauchern sowie dem Ladevorgang zugeordnete Zählfrequenzen gezählt. Auf diese Weise erhält man lediglich einen dem Lade- und Entladestrom annähernd proportionalen Zählerstand.

Bei dem erfindungsgemäßen Verfahren kann bei Erreichen eines kritischen Zählerstands außer der Verbraucherabschaltung zur Verbesserung der Energiebilanz auch eine Erhöhung der Leerlaufdrehzahl vorgenommen werden, wobei Verbraucherprioritäten berücksichtigt werden können.

Zur Bestimmung des Bordnetzzustands kann bei eingeschalteter Zündung, wenn das Bordnetzsteuergerät aktiv ist, der prozentuale Anteil der Zeiten mit kritischem Bordnetzbetrieb während eines Betrachtungszeitraums gemessen werden, wobei ein prozentualer Anteil von ≥ 50 % für den jeweiligen Betrachtungszeitraum eine hohe Bordnetzbelastung bedeuten kann und den Zählerstand um 1 erhöht. Eine Erhöhung des Zählerstand um 1 kann auch dann erfolgen, wenn ein extremer Kurzstreckenbetrieb vorliegt, beispielsweise wenn der Motor weniger als 60 Sekunden läuft. Diese Kriterien sind vom Bordnetzsteuergerät auf einfache Weise festzustellen, wobei ein kritischer Bordnetzbetrieb anhand der Batteriespannung festgestellt werden kann.

Der Zählerstand kann um 1 erniedrigt werden, wenn beispielsweise während der Fahrt der prozentuale zeitliche Anteil kritischer Bordnetzbetribszeiten während eines Betrachtungszeitraums ≤ 30 % ist. Eine Reduzierung des Zählerstands kann dabei auf den Wert Null begrenzt werden, während als Maximalwert der Wert 3 festgelegt werden kann, der die Einleitung von Maßnahmen zur Verbesserung der Energiebilanz des Bordnetzes erfordert. Bei dem erfindungsgemäßen Verfahren kann vorgesehen sein, daß beim Abstellen des Motors die Betrachtung des prozentualen Anteils der Zeiten mit kritischem Bordnetzbetrieb neu gestartet wird. Dadurch wird eine Fehlbewertung von Betrachtungszeiträumen vermieden.

Gemäß einer vorteilhaften Weiterbildung der Erfindung ist vorgesehen, daß der Zählerstand, wenn die Zündung aus ist, jeweils um 1 erhöht wird, wenn während zweier aufeinanderfolgender Betrachtungszeitpunkte der Bordnetzbetrieb aufgrund von Unterspannung im Bordnetz kritisch war. Dadurch wird eine angemessene Bewertung von Bordnetzbelastungen bei stillstehendem Fahrzeug erreicht.

Um eine möglichst frühzeitige Verbesserung des Batteriezustandes zu erreichen, kann bei einem Zählerstand von 3 bereits in der Startphase eine prioritätsabhängige Verbraucherabschaltung erfolgen. Die Verbraucherabschaltung kann in der Startphase wieder aufgehoben werden, wenn der Zählerstand aufgrund positiver Energiebilanzzeiten wieder den Wert Null erreicht hat. Durch diese Maßnahme wird sichergestellt, daß nach einer starken Bordnetzbelastung wieder ein stabiler Zustand für das Bordnetz bzw. für die Fahrzeugbatterie erreicht wird.

Ein kritischer Bordnetzbetrieb kann vorliegen, wenn für eine vorgegebene Zeitspanne, beispielsweise für 15 Sekunden, eine Unterspannung im Bordnetz auftritt. Liegt bei laufendem Motor die Bordnetzspannung zwei Sekunden über einem kritischen Wert, so deutet dies darauf hin, daß kein kritischer Bordnetzbetrieb mehr vorliegt. Die dabei gewählten Zeitspannen können auf das jeweilige Fahrzeug bzw. auf das jeweilige Bordnetz abgestimmt sein und somit von den angegebenen Zeiten abweichen.

Der Erfindung liegt weiterhin die Aufgabe zugrunde, eine Schaltungsanordnung zur Durchführung des erfindungsgemäßen Verfahrens anzugeben, die eine Ermittlung des Bordnetzzustandes mit möglichst geringem Zusatzaufwand im Bordnetz eines Kraftfahrzeugs ermöglicht.

Die Lösung dieser Aufgabe erhält man durch die im Anspruch 18 aufgeführten Merkmale. Das Bordnetzsteuergerät ist mit einem Zustandszähler verbunden, in welchem bei Auftreten von Betrachtungszeiträumen mit hoher Bordnetzbelastung eine Zählerstandserhöhung erfolgt. In Verbindung mit einem Sollwertspeicher kann das Bordnetzsteuergerät feststellen, ob eine Unterspannung für einen kritischen Zeitraum vorliegt und ob der Zählerstand für einen vorgegebenen Betrachtungszeitraum zu erhöhen ist. Anhand des Sollwertspeichers kann das Bordnetzsteuergerät auch feststellen, ob Zeiträume mit positiver Energiebilanz vorliegen und ob somit eine entsprechende Reduzierung des Zählerstands erfolgen kann. Der Zähler kann dabei als Vor-Rückwärtszähler ausgebildet sein.

Wenn man über die Betrachtung des Momentanzustands hinaus zu einer Gewichtung bei der Beurteilung des aktuellen Bordnetzzustandes gelangen möchte, muß man Kennwerte ablegen, die eine Aussage über die Häufigkeit und die Dauer von belastenden, d. h. die Batterie entladenden, Zuständen zulassen. Diese Werte müssen über die Fahrt hinaus gespeichert werden. Es wird also eine Historie angelegt, die es erlaubt, bei sporadisch auftretenden Überbelastungen nicht sofort zu reagieren. Somit können Komfortfunktionen länger aufrecht gehalten werden. Beim Mitschreiben der Historie wäre der Hardwareaufwand groß, wenn man die echten Meßdaten tatsächlich über einen längeren Zeitraum speichern würde. Aus diesem Grund wird ein Zähler eingeführt, der die Bordnetzzustände der Vergangenheit repräsentiert und dabei den Speicheraufwand erheblich verringert. In Abhängigkeit des Zählers kann entschieden werden, ob ein auftretender kritischer Bordnetzzustand mit der Abschaltung von Verbrauchern beantwortet werden muß oder ob dies notwendig ist, da die Zeiträume davor überwiegend unkritisch waren.

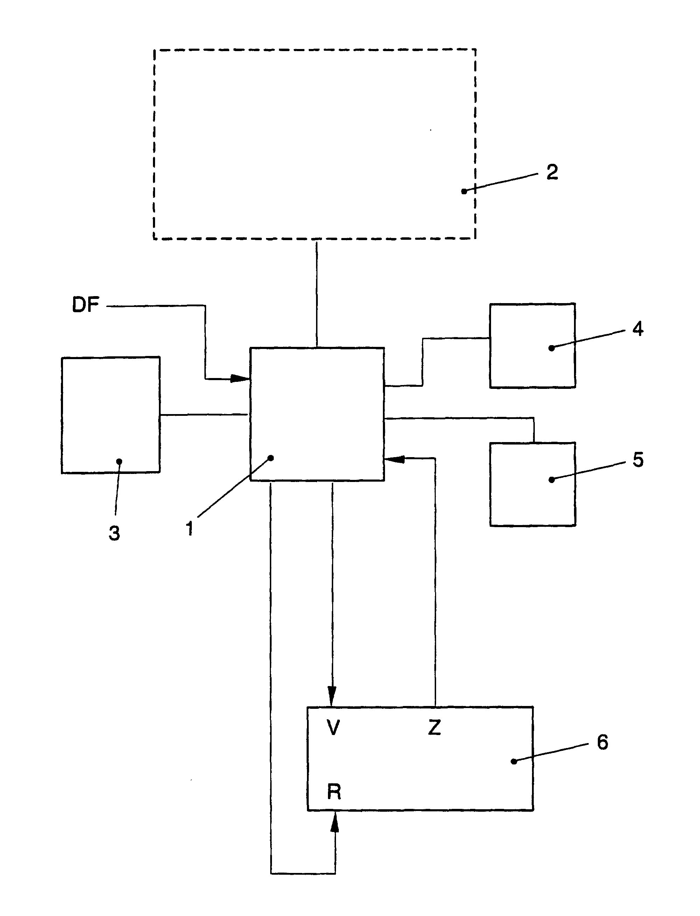

Die Erfindung wird nachfolgend anhand einer in der Zeichnung dargestellten erfindungsgemäßen Schaltungsanordnung näher erläutert.

Die Schaltungsanordnung umfaßt ein Bordnetzsteuergerät 1, das mit mehreren Verbrauchern 2 in Verbindung steht, die vom Bordnetzsteuergerät 1 bei Bedarf ein- oder ausgeschaltet werden können. An das Bordnetzsteuergerät 1 sind außerdem ein Motorsteuergerät 3, ein Sollwertspeicher 4, eine Fahrzeugbatterie 5 und ein Zustandszähler 6 angeschlossen. Außerdem erhält das Bordnetzsteuergerät 1 ein den Auslastungsgrad des im Fahrzeug befindlichen Generators charakterisierendes Signal, welches als DF-Signal bezeichnet wird.

Um zu Beginn einer Fahrt die Funktionalität der vom Fahrer gewünschten Komponenten zur Verfügung zu stellen, sollten in der Startphase normalerweise keine Verbraucher abgeschaltet werden. Nach der Startphase können einzelne Verbraucher nach ihrer Priorität ab- oder zugeschaltet werden, um eine Verbesserung der Energiebilanz im Bordnetz zu erzielen. Dabei bedeutet niedrige Priorität frühes Ausschalten eines Verbrauchers.

Bei Inaktivem Generator können beispielsweise die Innenraumbeleuchtung und/oder die Leselampe während eines kritischen Bordnetzzustandes für kurze Zeit eingeschaltet werden, um ein sicheres Ein- und Aussteigen zu gewährleisten.

Bei häufigem Kurzstreckenbetrieb oder bei sonstigen Betriebsbedingungen mit hohen Bordnetzbelastungen kann die volle Funktionalität der vom Fahrer gewünschten Komponenten gegebenenfalls bereits ab dem Start zugunsten der Batterieladung eingeschränkt werden, in dem ohne Berücksichtigung einer Wartezeit sofort Verbraucher abgeschaltet werden. Hierfür wird während der Fahrt und bei stehendem Motor mit aktivem Bordnetzsteuergerät 1 der prozentuale Anteil kritischer Bordnetzbetriebszeiten an der gesamten Fahrzeit ermittelt. Liegt dieser prozentuale Anteil am Ende des Betrachtungszeitraumes über 50 %, oder war der Motor weniger als 60 Sekunden an, wird der Zählerstand des Zustandszählers 6 um 1 erhöht, und zwar bis auf einen maximalen Wert von Z = 3. Liegt der Anteil der kritischen Bordnetzbetriebszeiten nach einer Fahrt unter 30 %, wird der Zählerstand jeweils am Ende der Fahrt um 1 heruntergezählt. Beim Abschalten des Motors startet die Bestimmung des prozentualen Anteils kritischer Bordnetzbetriebszeiten innerhalb der Betrachtungszeiträume neu.

Befindet sich das Bordnetzsteuergerät 1 im Bereitschaftsmodus wird der Zählerstand des Zustandszählers 6 jeweils dann um 1 bis auf einen maximalen Wert von Z = 3 erhöht, wenn bei der aktuellen sowie bei der vorangegangenen Messung ein kritischer Bordnetzbetrieb festgestellt wurde. Erreicht der Zähler den Stand 3, wird die Zeitgrenze für die Verbraucherabschaltung auf Null Sekunden gesetzt, d. h. es können nun bereits in der Startphase Verbraucher prioritätsabhängig abgeschaltet werden, um eine Verbesserung der Energiebilanz zu erreichen.

Die Bestimmung des prozentualen Anteils kritischer Bordnetzbetriebszeiten kann derart erfolgen, daß ein kritischer Bordnetzbetrieb mit jeweils 10 Sekunden Länge als kritisch bewertet wird. Bei weniger als 10 Sekunden Länge werden die Betriebszeiten als unkritisch bewertet. Der maximale Betrachtungszeitraum kann auf 5 Stunden beschränkt sein, wobei der bis dahin ermittelte Wert dann eingefroren werden kann.

Ob jeweils kritische Bordnetzbetriebszeiten innerhalb eines Betrachtungszeitraums vorliegen, kann durch Messung der Batteriespannung an der Fahrzeugbatterie 5 erfolgen. Unterschreitet die Batteriespannung einen im Sollwertspeicher 4 abgelegten kritischen Spannungswert für eine Zeitspanne von wenigstens 15 Sekunden bei eingeschaltetem Motor und/oder eingeschaltetem Bordnetzsteuergerät, so wird dieser Zustand als kritischer Bordnetzbetrieb vom Bordnetzsteuergerät 1 erkannt. Der Zustand "Bordnetzbetrieb kritisch" wird wieder aufgehoben, wenn die Spannung der Fahrzeugbatterie 5 wenigstens zwei Sekunden lang über einer im Sollwertspeicher 4 abgelegten kritischen Batteriespannung liegt.

Befindet sich das Bordnetzsteuergerät 1 im Bereitschaftsmodus bei Zündung aus, erfolgt alle 10 Minuten eine Spannungsmessung, wobei der Bordnetzbetrieb als kritisch eingestuft wird, wenn bei zwei aufeinanderfolgenden Messungen Unterspannung unter einer im Sollwertspeicher 4 abgelegten kritischen Batteriespannung festgestellt wird. Liegt die Spannung bei zwei aufeinanderfolgenden Messungen über der kritischen Batteriespannung, so kann der Zustand "Bordnetzbetrieb kritisch" wieder aufgehoben werden.

Um den Zählerstand des Zustandszählers 6 erhöhen oder verringern zu können, ist das Bordnetzsteuergerät 1 mit dem Vorwärtszähleingang V und dem Rückwärtszähleingang R des Zustandzählers 6 verbunden. Der aktuelle Zählerstand wird an dem Ausgang Z dem Bordnetzsteuergerät 1 zugeführt.

Wesentlich ist bei dem erfindungsgemäßen Verfahren, daß nicht bei jedem Auftreten eines kritischen Bordnetzbetriebs sofort entsprechende Verbraucher abgeschaltet werden, sondern daß die Historie des Bordnetzbetriebs in vorausgegangenen Betrachtungszeiträumen berücksichtigt wird. Erst wenn aufgrund von einem entsprechend hohen prozentualen Anteil kritischer Bordnetzbetriebszeiten in einem Betrachtungszeitraum eine hohe Bordnetzbelastung festgestellt wird, wird der Zählerstand des Zustandszählers 6 um 1 erhöht. Aufgrund positiver Energiebilanzabschnitte kann der Zählerstand wieder verringert werden. Erst wenn der Zählerstand einen vorgegebenen kritischen Wert, beispielsweise den Zählerstand Z = 3, erreicht, werden Maßnahmen ergriffen, um eine Verbesserung der Energiebilanz zu erreichen. Es werden Verbraucher reduziert oder abgeschaltet und es kann eine Anhebung der Leerlaufdrehzahl erfolgen. Diese Maßnahmen werden wieder zurückgenommen, wenn der Zählerstand einen vorgegebenen Wert, beispielsweise den Wert Null erreicht hat.

### BEZUGSZEICHENLISTE

1 Bordnetzsteuergerät
2 Verbraucher
3 Motorsteuergerät
4 Sollwertspeicher
5 Fahrzeugbatterie
6 Zustandszähler

## Patentansprüche

1. Verfahren zum Betreiben des Bordnetzes eines Fahrzeugs, bei dem der Bordnetzzustand überwacht wird und bei Auftreten von Betrachtungszeiträumen mit zu hoher Bordnetzbelastung Maßnahmen zur Verbesserung der Energiebilanz eingeleitet werden, **dadurch gekennzeichnet, daß** nach jedem Betrachtungszeitraum mit über das Stromangebot des Generators hinausgehender Bordnetzbelastung der Zählerstand eines Zustandszählers (6) erhöht wird, daß nach jedem Betrachtungszeitraum mit positiver Energiebilanz des Bordnetzes der Zählerstand des Zustandszählers (6) erniedrigt wird und daß, wenn der Zählerstand einen kritischen Wert erreicht, Maßnahmen zur Verbesserung der Energiebilanz des Bordnetzes eingeleitet werden.

2. Verfahren nach Anspruch 1, **dadurch gekennzeichnet, daß** zur Verbesserung der Energiebilanz Verbraucher abgeschaltet oder daren Aufnahmeleistung reduziert werden.

3. Verfahren nach einem der Ansprüche 1 oder 2, **dadurch gekennzeichnet, daß** zur Verbesserung der Energiebilanz eine Erhöhung der Leerlaufdrehzahl erfolgt.

4. Verfahren nach einem der vorhergehenden Ansprüche, **dadurch gekennzeichnet, daß** während der Fahrt, wenn das Bordnetzsteuergerät (1) aktiv ist, der prozentuale Anteil der Zeiten mit kritischem Bordnetzbetrieb während eines Betrachtungszeitraums gemessen wird, und daß ein prozentualer Anteil über einem vorgegebenen Wert für den Betrachtungszeitraum eine zu hohe Bordnetzbelastung bedeutet und den Zählerstand des Zustandszählers (6) um 1 erhöht.

5. Verfahren nach einem der vorhergehenden Ansprüche, **dadurch gekennzeichnet, daß** bei Motorbetriebszeiten von weniger als 60 Sekunden dies als ein Betrachtungszeitraum mit hoher Bordnetzbelastung angesehen wird und der Zählerstand des Zustandszählers (6) um 1 erhöht wird.

6. Verfahren nach einem der Ansprüche 4 oder 5, **dadurch gekennzeichnet, daß** der Zählerstand nur bis auf einen vorgegebenen kritischen Maximalwert erhöht werden kann.

7. Verfahren nach Anspruch 6, **dadurch gekennzeichnet, daß** der kritische Maximalwert des Zählerstands Z = 3 ist.

8. Verfahren nach einem der Ansprüche 4 bis 7, **dadurch gekennzeichnet, daß** der Zählerstand um 1 erniedrigt wird, wenn während der Fahrt und/oder bei aktivem Bordnetzsteuergerät (1) der prozentuale zeitliche Anteil kritischer Bordnetzbetriebszeiten während eines Betrachtungszeitraums weniger als 30 % beträgt.

9. Verfahren nach einem der Ansprüche 4 bis 8, **dadurch gekennzeichnet, daß** beim Abstellen und Anlassen des Motors die Bewertung des prozentualen Anteils der Zeiten mit kritischen Bordnetzbetriebszeiten neu startet.

10. Verfahren nach einem der vorhergehenden Ansprüche, **dadurch gekennzeichnet, daß** bei Zündung aus der Zählerstand, wenn das Bordnetzsteuergerät (1) sich im Bereitschaftsmodus befindet, jeweils um 1 erhöht wird, wenn während zweier aufeinanderfolgender Betrachtungszeiträume der Bordnetzbetrieb aufgrund von Unterspannung im Bordnetz kritisch war.

11. Verfahren nach einem der vorhergehenden Ansprüche, **dadurch gekennzeichnet, daß** bei einem Zählerstand von Z = 3 eine prioritätsabhängige Verbraucherabschaltung schon in der Startphase erfolgt.

12. Verfahren nach Anspruch 11, **dadurch gekennzeichnet, daß** die Verbraucherabschaltung in der Startphase aufgehoben wird, wenn der Zählerstand wieder den Wert Z = 0 erreicht.

13. Verfahren nach einem der vorhergehenden Ansprüche, **dadurch gekennzeichnet, daß** ein kritischer Bordnetzbetrieb vorliegt, wenn für eine vorgegebene Zeitspanne Unterspannung im Bordnetz auftritt.

14. Verfahren nach Anspruch 13, **dadurch gekennzeichnet, daß** die Zeitspanne bei laufendem Motor und bei eingeschaltetem Bordnetzsteuergerät (1) 15 Sekunden beträgt.

15. Verfahren nach einem der Ansprüche 13 oder 14, **dadurch gekennzeichnet, daß** bei laufendem Motor und/oder eingeschaltetem Bordnetzsteuergerät (1) ein kritischer Bordnetzbetrieb dann nicht mehr vorliegt, wenn die Bordnetzspannung zwei Sekunden über einer vorgegebenen kritischen Batteriespannung liegt.

16. Verfahren nach einem der vorhergehenden Ansprüche, **dadurch gekennzeichnet, daß** abgeschaltete Verbraucher mit sich verbessernder Energiebilanz und bei reduzierter Generatorbelastung nacheinander wieder eingeschaltet werden.

17. Schaltungsanordnung zur Durchführung des Verfahrens nach einem der vorhergehenden Ansprüche, **dadurch gekennzeichnet, daß** ein Bordnetzsteuergerät (1) die Batteriespannung einer Fahrzeugbatterie (5) mißt, daß das Bordnetzsteuergerät (1) die gemessene Batteriespannung mit in einem Sollwertspeicher (4) abgelegten Sollwerten vergleicht, und daß das Bordnetzsteuergerät (1) mit einem Zustandszähler (6) verbunden ist, dessen Zählerstand in Abhängigkeit vom Bordnetzzustand erhöht oder erniedrigt wird und somit eine Bilanz des Bordnetzzustandes anzeigt.

18. Schaltungsanordnung nach Anspruch 18, **dadurch gekennzeichnet, daß** der Zustandszähler (6) als Vor-Rückwärtszähler ausgebildet ist.

## Claims

1. Method for operating the on-board electrical system of a vehicle, in which method the state of the on-board electrical system is monitored and measures for improving the energy balance are initiated when inspection periods with excessively high loading of the on-board electrical system occur, **characterized in that** the reading of a state counter (6) is increased after each inspection period having loading of the on-board electrical system which is in excess of the power that can be provided by the generator, **in that** the reading of the state counter (6) is lowered after each inspection period having a positive energy balance of the on-board electrical system, and **in that** measures for improving the energy balance of the on-board electrical system are initiated when the reading reaches a critical value.

2. Method according to Claim 1, **characterized in that** loads are switched off, or the power consumption thereof is reduced, in order to improve the energy balance.

3. Method according to either of Claims 1 or 2, **characterized in that** the idling speed is increased in order to improve the energy balance.

4. Method according to one of the preceding claims, **characterized in that**, during driving, when the on-board electrical system controller (1) is active, the percentage of times having critical operation of the on-board electrical system during one inspection period is measured, and **in that** a percentage above a predefined value for the inspection period means excessively high loading of the on-board electrical system and the reading of the state counter (6) is increased by 1.

5. Method according to one of the preceding claims, **characterized in that** engine operating times of less than 60 seconds are considered to be inspection periods having high loading of the on-board electrical system and the reading of the state counter (6) is increased by 1.

6. Method according to either of Claims 4 or 5, **characterized in that** the reading can only be increased up to a predefined critical maximum value.

7. Method according to Claim 6, **characterized in that** the critical maximum value of the reading is Z = 3.

8. Method according to one of Claims 4 to 7, **characterized in that** the reading is lowered by 1 when, during driving and/or when the on-board electrical system controller (1) is active, the percentage over time of critical operating times of the on-board electrical system is less than 30% during one inspection period.

9. Method according to one of Claims 4 to 8, **characterized in that** the evaluation of the percentage of times having critical operation of the on-board electrical system is restarted when the engine is turned off and started.

10. Method according to one of the preceding claims, **characterized in that** with the ignition off, the reading is in each case increased by 1 when the on-board electrical system controller (1) is in standby mode, if during two successive inspection periods, the on-board electrical system operation was critical on account of an undervoltage in the on-board electrical system.

11. Method according to one of the preceding claims, **characterized in that** when the reading is Z = 3, loads are switched off as a function of priority as early as in the starting phase.

12. Method according to Claim 11, **characterized in that** switching off of loads in the starting phase is discontinued when the reading reaches the value Z = 0 again.

13. Method according to one of the preceding claims, **characterized in that** a critical operating mode of the on-board electrical system occurs when an undervoltage occurs in the on-board electrical system for a predefined length of time.

14. Method according to Claim 13, **characterized in that** the length of time during which the engine is running and the on-board electrical system controller (1) is switched on is 15 seconds.

15. Method according to either of Claims 13 or 14, **characterized in that** when the engine is running and/or the on-board electrical system controller (1) is switched on, a critical operating mode of the on-board electrical system no longer occurs when the on-board electrical system voltage is above a predefined critical battery voltage for two seconds.

16. Method according to one of the preceding claims, **characterized in that** loads which have been switched off are successively switched on again as the energy balance improves and when the loading of the generator falls.

17. Circuit arrangement for carrying out the method according to one of the preceding claims, **characterized in that** an on-board electrical system controller (1) measures the battery voltage of a vehicle battery (5), **in that** the on-board electrical system controller (1) compares the measured battery voltage with setpoint values stored in a setpoint memory (4), and **in that** the on-board electrical system controller (1) is connected to a state counter (6), the reading of this state counter being increased or lowered as a function of the state of the on-board electrical system, thus indicating a balance of the state of the on-board electrical system.

18. Circuit arrangement according to Claim 17, **characterized in that** the state counter (6) is in the form of an up/down counter.

## Revendications

1. Procédé pour l'exploitation du réseau de bord d'un véhicule, dans lequel l'état du réseau de bord est surveillé et des mesures pour améliorer le bilan énergétique sont mises en oeuvre en cas d'apparition de périodes prises en compte avec une charge de réseau de bord trop élevée, **caractérisé en ce que** la position d'un compteur d'état (6) est augmentée après chaque période prise en compte avec une charge de réseau de bord dépassant la fourniture de courant de l'alternateur, **en ce que** la position du compteur d'état (6) est abaissée après chaque période prise en compte avec un bilan énergétique du réseau de bord positif et **en ce que**, lorsque la position de compteur atteint une valeur critique, des mesures sont mises en oeuvre pour améliorer le bilan énergétique du réseau de bord.

2. Procédé selon la revendication 1, **caractérisé en ce que** des consommateurs sont déconnectés ou leur puissance consommée est réduite pour améliorer le bilan énergétique.

3. Procédé selon l'une quelconque des revendications 1 ou 2, **caractérisé en ce qu'**une élévation du régime de ralenti intervient pour améliorer le bilan énergétique.

4. Procédé selon l'une quelconque des revendications précédentes, **caractérisé en ce que**, pendant le trajet, lorsque l'appareil de commande du réseau de bord (1) est actif, on mesure la fraction en pourcentage des périodes avec un fonctionnement critique du réseau de bord pendant une période prise en compte et **en ce qu'**une fraction en pourcentage au-delà d'une valeur prédéfinie pour la période prise en compte signifie une charge trop élevée du réseau de bord et augmente la position du compteur d'état (6) de 1.

5. Procédé selon l'une quelconque des revendications précédentes, **caractérisé en ce que**, avec des temps de fonctionnement du moteur inférieurs à 60 secondes, celui-ci est considéré comme une période prise en compte avec une charge élevée du réseau de bord et la position du compteur d'état (6) est augmentée de 1.

6. Procédé selon l'une quelconque des revendications 4 ou 5, **caractérisé en ce que** la position de compteur ne peut être augmentée que jusqu'à une valeur maximale critique prédéfinie.

7. Procédé selon la revendication 6, **caractérisé en ce que** la valeur maximale critique de la position de compteur Z est égale à 3.

8. Procédé selon l'une quelconque des revendications 4 à 7, **caractérisé en ce que** la position du compteur est abaissée de 1 lorsque, pendant le trajet et/ou avec un appareil de commande du réseau de bord (1) actif, la fraction de temps en pourcentage de périodes de fonctionnement critiques du réseau de bord pendant une période prise en compte est inférieure à 30 %.

9. Procédé selon l'une quelconque des revendications 4 à 8, **caractérisé en ce que**, lors de l'arrêt et du démarrage du moteur, l'évaluation de la fraction en pourcentage des périodes avec des périodes de fonctionnement critiques du réseau de bord redémarre.

10. Procédé selon l'une quelconque des revendications précédentes, **caractérisé en ce que**, en cas d'arrêt de l'allumage, la position du compteur, lorsque l'appareil de commande du réseau de bord (1) se trouve en mode veille, est augmentée respectivement de 1 lorsque le fonctionnement du réseau de bord a été critique en raison de sous-tension dans le réseau de bord pendant deux périodes prises en compte successives.

11. Procédé selon l'une quelconque des revendications précédentes, **caractérisé en ce que**, avec une position de compteur Z = 3, on a une déconnexion des consommateurs dépendante de la priorité déjà lors de la phase de démarrage.

12. Procédé selon la revendication 11, **caractérisé en ce que** la déconnexion des consommateurs lors de la phase de démarrage est supprimée lorsque la position de compteur atteint à nouveau la valeur Z = 0.

13. Procédé selon l'une quelconque des revendications précédentes, **caractérisé en ce qu'**on a un fonctionnement critique du réseau de bord lorsque de la sous-tension apparaît dans le réseau de bord pour un laps de temps prédéfini.

14. Procédé selon la revendication 13, **caractérisé en ce que** le laps de temps avec un moteur en marche et avec un appareil de commande de réseau de bord (1) allumé est de 15 secondes.

15. Procédé selon l'une quelconque des revendications 13 ou 14, **caractérisé en ce que**, avec un moteur en marche et/ou un appareil de commande du réseau de bord (1) allumé, on n'a plus un fonctionnement critique du réseau de bord lorsque la tension du réseau de bord est supérieure à une tension de batterie critique prédéfinie pendant deux secondes.

16. Procédé selon l'une quelconque des revendications précédentes, **caractérisé en ce que** des consommateurs déconnectés sont reconnectés les uns après les autres avec un bilan énergétique qui s'améliore et dans le cas d'une charge d'alternateur réduite.

17. Disposition de circuit pour l'application du procédé selon l'une quelconque des revendications précédentes, **caractérisée en ce qu'**un appareil de commande du réseau de bord (1) mesure la tension de batterie d'une batterie de véhicule (5), **en ce que** l'appareil de commande du réseau de bord (1) compare la tension de batterie mesurée avec des valeurs de consigne déposées dans une mémoire de valeurs de consigne (4) et **en ce que** l'appareil de commande du réseau de bord (1) est relié à un compteur d'état (6), dont la position est augmentée ou abaissée en fonction de l'état du réseau de bord et affiche ainsi un bilan de l'état du réseau de bord.

18. Disposition de circuit selon la revendication 18, **caractérisée en ce que** le compteur d'état (6) est conçu comme un compteur avant-arrière.
